# FASCICULE DE BREVET EUROPEEN

(11) **EP 2 250 725 B1**
(45) Date de publication et mention de la délivrance du brevet: **08.05.2019**
(21) Numéro de dépôt: 09717285.2
(22) Date de dépôt: 12.02.2009
(51) Int. Cl.: H02K 35/02, H02K 35/06

(54) **DISPOSITIF DE GENERATION D'ENERGIE A DEUX PARTIES MOBILES**
STROMERZEUGUNGSVORRICHTUNG MIT ZWEI MOBILEN TEILEN
POWER GENERATION DEVICE WITH TWO MOBILE PARTS

(30) Priorité: 04.03.2008 FR 0851405
(43) Date de publication de la demande: 17.11.2010
(73) Titulaire: Schneider Electric Industries SAS, 92500 Rueil-Malmaison (FR)
(72) Inventeur: BATAILLE, Christian, F-38500 Voiron (FR); VIGOUROUX, Didier, F-38190 Villard Bonnot (FR)
(74) Mandataire: Dufresne, Thierry
(86) Numéro de dépôt international: PCT/EP2009/051633
(87) Numéro de publication internationale: WO 2009/109449

(56) Documents cités:
- WO-A-86/05928
- DE-A1- 4 405 846
- DE-A1- 19 852 470
- FR-A- 2 893 780
- FR-A1- 2 893 780
- US-A- 4 827 163

## Description

La présente invention se rapporte à un dispositif de génération d'énergie pour convertir une énergie mécanique en énergie électrique. L'invention concerne également un dispositif de commande autonome et sans fil intégrant le dispositif de génération d'énergie.

Il est connu par la demande de brevet WO 2004/093299 un convertisseur d'énergie mécanique en énergie électrique. Ce convertisseur comporte un aimant permanent et un élément magnétique doux formant tous deux un circuit magnétique et une bobine électrique entourant une partie du circuit magnétique. L'élément magnétique doux et l'aimant permanent sont montés rotatifs l'un par rapport à l'autre, ce qui permet lors d'un mouvement de l'un par rapport à l'autre de créer une variation de flux dans le circuit magnétique traversant la bobine, entraînant la génération d'un courant électrique dans la bobine.

Le document WO 2004/093299 prévoit d'utiliser le convertisseur dans un commutateur d'énergie autonome, c'est-à-dire sans source d'énergie et sans fil. Lors de l'activation mécanique du commutateur, le courant électrique généré par la variation du flux magnétique traversant la bobine permet d'alimenter un émetteur de signal radio. Le signal radio est envoyé vers un récepteur distant qui se charge alors de mettre en marche un appareil électrique. Lorsque le commutateur est très éloigné du récepteur ou est séparé de celui-ci par de nombreux obstacles, le signal radio généré n'est pas toujours d'une intensité suffisante pour atteindre systématiquement le récepteur. Pour améliorer les performances du convertisseur, il faut par exemple augmenter le nombre de spires de la bobine ce qui augmente la taille du commutateur et ce qui, compte tenu du coût du fil de cuivre utilisé pour le bobinage, le rend beaucoup plus onéreux.

D'autres convertisseurs d'énergie mécanique en énergie électrique sont décrits dans les documents FR 2893780, DE 19852470 A, DE 4405846 A.

Le but de l'invention est de proposer un dispositif de génération d'énergie du type de celui décrit ci-dessus présentant des performances améliorées tout en conservant un encombrement réduit et un coût modeste.

Ce but est atteint par un dispositif de génération d'énergie comprenant :
- une bobine d'excitation dotée d'une ouverture centrale,
- un circuit magnétique traversant l'ouverture centrale de la bobine et comportant au moins un aimant permanent et plusieurs éléments ferromagnétiques et pouvant prendre deux états; un premier état dans lequel un flux magnétique traverse la bobine dans un premier sens et un deuxième état dans lequel un flux magnétique traverse la bobine dans le sens opposé au premier sens,
- l'aimant permanent et les éléments ferromagnétiques sont agencés dans une partie fixe et deux parties mobiles,
- les deux parties mobiles sont montées sur deux axes rotatifs parallèles entre eux et peuvent prendre chacune deux positions coordonnées,
- le dispositif comporte des moyens d'actionnement agencés pour actionner les deux parties mobiles en rotation entre leurs deux positions,
- lorsque les deux parties mobiles sont ensemble dans ladite première position, le circuit magnétique est dans ledit premier état et lorsque les deux parties mobiles sont ensemble dans ladite deuxième position, le circuit magnétique est dans ledit deuxième état.

Selon l'invention, le système birotor, c'est-à-dire à deux parties mobiles, utilisé dans l'invention, permet d'améliorer de manière significative les performances des dispositifs de génération d'énergie actuels. L'emploi de deux parties mobiles permet en outre de pouvoir optimiser l'encombrement du dispositif en le rendant particulièrement compact sans altérer ses performances.

L'emploi des deux parties mobiles permet de réduire l'effort d'actionnement du dispositif et d'augmenter la vitesse de rotation des parties mobiles ce qui produit une variation de flux importante et donc une tension induite élevée dans le fil de l'enroulement de la bobine.

Selon une particularité, le flux magnétique créé dans un sens est égal à l'inverse du flux magnétique créé dans le sens opposé. Ceci est le cas lorsque le circuit magnétique comporte un seul aimant fixe ou deux aimants identiques mobiles.

Selon une autre particularité de l'invention, les deux parties mobiles fournissent un effort résistant aux moyens d'actionnement lors d'une première partie de l'actionnement et un effort moteur aux moyens d'actionnement lors d'une seconde partie de l'actionnement.

Selon une première variante de réalisation, les deux parties mobiles comprennent chacune un aimant permanent.

Selon une seconde variante de réalisation, les deux parties mobiles comprennent des éléments ferromagnétiques et l'aimant permanent est fixe.

Selon une particularité de l'invention, les moyens d'actionnement comportent un organe d'actionnement et des moyens d'entraînement des parties mobiles en rotation.

L'organe d'actionnement est relié à une première partie mobile.

Les moyens d'entraînement comprennent des roues à engrenages pour entraîner la seconde partie mobile lors de l'actionnement de la première partie mobile.

Dans une première configuration, l'organe d'actionnement est par exemple actionné suivant un axe perpendiculaire aux axes de rotation des parties mobiles. Cette configuration convient bien pour une application de type bouton poussoir industriel.

Dans une seconde configuration, l'organe d'actionnement est par exemple actionné suivant un axe parallèle aux axes de rotation des parties mobiles. Cette configuration convient bien pour une application de type interrupteur électrique résidentiel.

Selon une particularité de l'invention, l'organe d'actionnement est par exemple monté sur un ressort pour ramener les parties mobiles dans leur position initiale après un actionnement. Ainsi, il est possible de générer le double d'énergie.

L'invention concerne également un dispositif de commande autonome et sans fil, comprenant un dispositif de génération d'énergie du type écrit ci-dessus pour convertir une énergie mécanique en énergie électrique, l'énergie électrique étant apte à alimenter un module d'émission radio couplé à un module de réception distant.

D'autres caractéristiques et avantages vont apparaître dans la description détaillée qui suit en se référant à un mode de réalisation donné à titre d'exemple et représenté par les dessins annexés sur lesquels :
- la figure 1 représente le dispositif de génération d'énergie de l'invention en vue éclatée,
- la figure 2 représente le dispositif de génération d'énergie de l'invention entièrement assemblé,
- la figure 3 représente le dispositif de la figure 2 sur lequel une flasque a été retirée pour visualiser l'intérieur du dispositif,
- la figure 4 représente le dispositif de l'invention selon une variante de réalisation dans laquelle l'actionnement est réalisé suivant un axe parallèle aux axes de rotation des parties mobiles,
- les figures 5A et 5B représentent le dispositif respectivement dans la première position des parties mobiles et dans la seconde position des parties mobiles lorsque les parties mobiles comprennent chacune un aimant permanent,
- Les figures 6A et 6B montrent schématiquement le principe de fonctionnement du dispositif lorsque les parties mobiles sont des aimants permanents et indique le cheminement du flux magnétique pour chacune des positions des parties mobiles,
- La figure 7 montre une variante du dispositif dans laquelle l'aimant permanent est fixe et les parties mobiles sont constituées d'éléments ferromagnétiques.

Le dispositif 1 autonome de génération d'énergie électrique selon l'invention permet de générer un courant électrique dans une bobine d'excitation 2 en faisant varier le flux magnétique traversant la bobine 2 par une action mécanique externe, par exemple manuelle.

Un tel dispositif 1 peut être utilisé dans un dispositif de commande sans fil et sans source interne de courant. Ce dispositif de commande est par exemple actionné manuellement par un interrupteur de type à bascule ou poussoir apte à commander un appareil électrique tel que par exemple une lumière et peut être positionné sans contrainte à différents emplacements dans une pièce. Le dispositif de commande comporte un sous-ensemble mécanique (non représenté) destiné à recevoir le dispositif 1 autonome de génération d'énergie et des circuits électroniques alimentés par le dispositif de génération d'énergie. Les circuits électroniques (non représentés) comportent notamment des moyens de stockage de l'énergie électrique générée par le dispositif 1 selon l'invention, tels que des capacités, permettant de lisser la quantité de courant à délivrer pour envoyer des signaux radio vers un récepteur distant commandant un appareil électrique. Les différents circuits électroniques employés sont connus et sont par exemple décrits dans les demandes de brevet EP1238436 et EP0836166.

Le dispositif 1 de génération d'énergie électrique selon l'invention peut être mis en oeuvre pour des applications telles que commande de lampe mais également détecteur de position ou capteur de pression mécanique dans lequel la quantité de courant générée mesurée permet de déterminer si une force mécanique a été exercée. L'action mécanique permet de créer un courant électrique qui est utilisé pour déclencher par exemple une alarme ou un organe de signalisation ou pour alimenter un émetteur radio comme décrit précédemment. De même, il est possible d'envisager une application dans laquelle une action mécanique est transformée en énergie électrique servant par exemple à alimenter un émetteur radio. Une telle application est par exemple une serrure de disjoncteur apte à activer un dispositif de génération d'énergie pour envoyer un message à un central de sécurité.

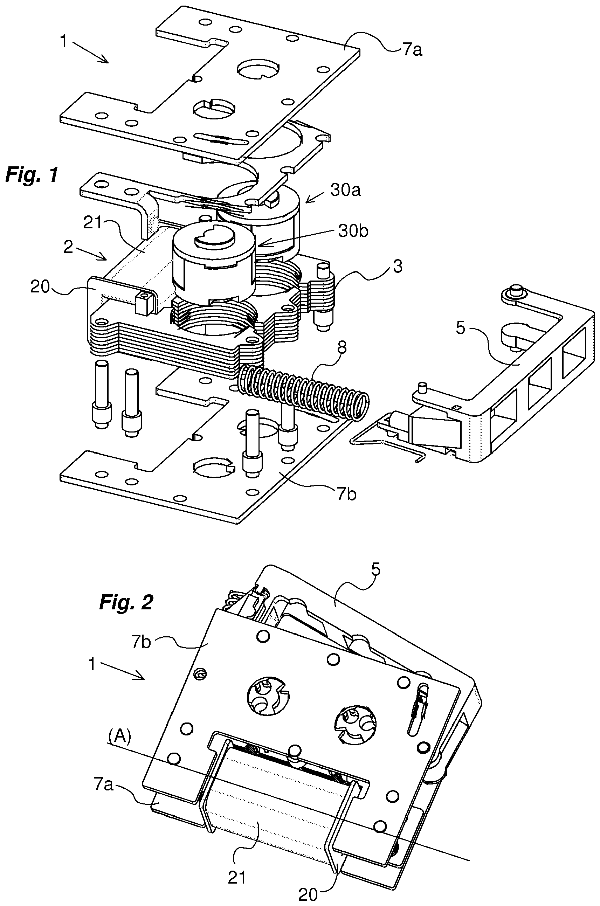

En référence aux figures 1 à 7, le dispositif 1 de génération d'énergie de l'invention comporte notamment une bobine d'excitation 2 dotée d'une ouverture centrale et un circuit magnétique 3 traversant l'ouverture centrale de la bobine 2.

La bobine 2 comporte une armature 20 réalisée dans un matériau amagnétique, sur laquelle est enroulé un enroulement 21 de N spires d'un fil conducteur. L'ouverture centrale est formée à travers l'armature 20 suivant un axe longitudinal (A) et présente des dimensions adaptées pour pouvoir être traversée par le circuit magnétique 3. Le circuit magnétique est par exemple réalisé sous forme de tôles empilées rivetées entre deux flasques 7a, 7b.

Le circuit magnétique 3 comporte au moins un aimant permanent 4a, 4b, 6 et des éléments ferromagnétiques agencés dans au moins une partie fixe et deux parties mobiles 30a, 30b. Les deux parties mobiles 30a, 30b sont chacune montées en rotation autour d'un axe, leurs axes de rotation étant parallèles entre eux. Chaque partie mobile 30a, 30b forme au moins deux entrefers dans le circuit magnétique. Le mouvement des parties mobiles par rapport à la partie fixe 3 crée une variation du flux magnétique à travers la bobine 2 ce qui entraîne la création d'un courant électrique dans la bobine 2. Le flux magnétique dans le circuit magnétique est défini par la variation de position des parties mobiles 30a, 30b par rapport à la partie fixe et la tension créée aux bornes de la bobine 2 par la variation de ce flux magnétique dépend du temps et donc de la vitesse de déplacement des parties mobiles 30a, 30b par rapport à la partie fixe.

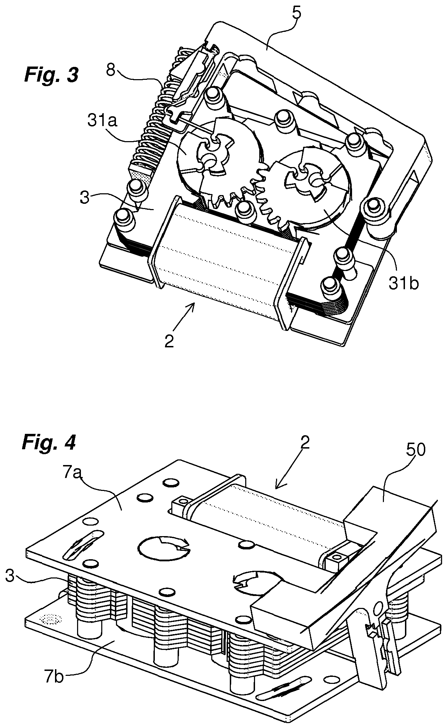

Le dispositif 1 de génération d'énergie comporte ainsi des moyens d'actionnement des parties mobiles 30a, 30b en rotation. Ces moyens d'actionnement comprennent notamment un organe d'actionnement 5, 50 et des moyens d'entraînement reliant l'organe d'actionnement 5, 50 aux parties mobiles 30a, 30b. L'organe d'actionnement 5, 50 peut par exemple être actionné, dans une première configuration (figure 2), suivant un axe perpendiculaire aux axes de rotation des parties mobiles 30a, 30b ou, dans une seconde configuration (figure 4), suivant un axe parallèle aux axes de rotation des parties mobiles 30a, 30b. La première configuration est par exemple adaptée pour être employée dans un dispositif de commande de type bouton poussoir et la seconde configuration dans un dispositif de commande de type interrupteur de commande résidentiel. Les moyens d'entraînement peuvent prendre différentes formes. Sur la figure 3, ils consistent par exemple en une première roue à engrenages 31a montée sur le même axe de rotation que la première partie mobile 30a et engrenée avec une seconde roue à engrenages 31b montée sur l'axe de rotation de la seconde partie mobile 30b. L'organe d'actionnement 5, 50 est relié à l'une des roues à engrenages. La rotation de l'une des deux roues à engrenages et donc d'une partie mobile entraîne l'autre roue à engrenages et donc l'autre partie mobile. L'organe d'actionnement 5 peut par exemple être monté sur un ressort 8 de manière à revenir en position initiale après chaque actionnement.

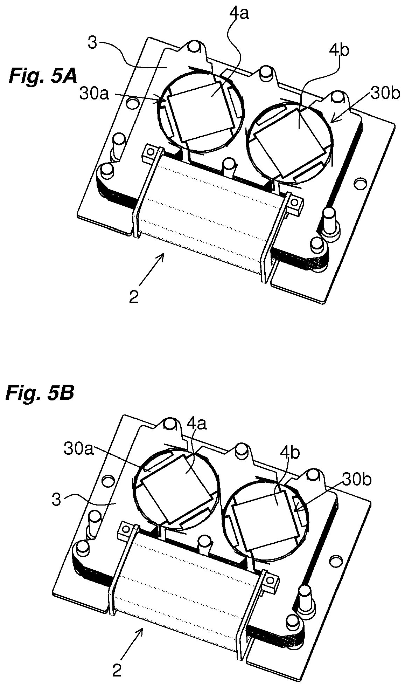

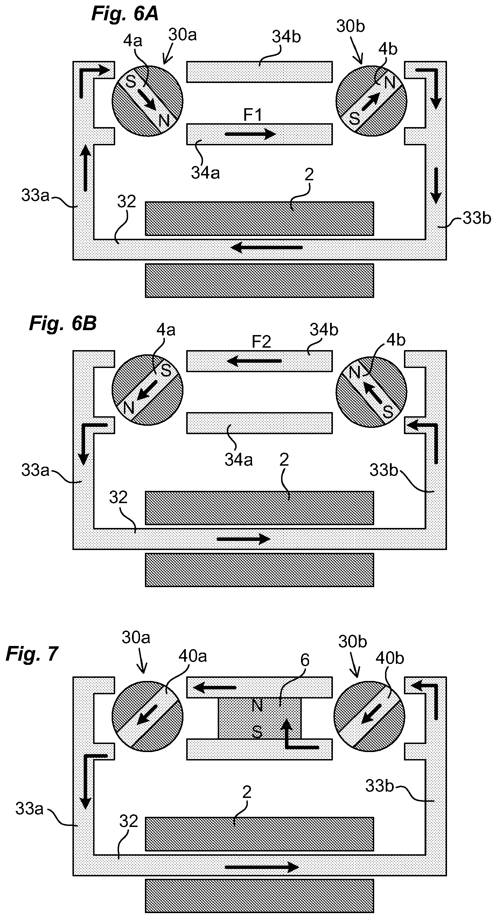

Selon l'invention, les deux parties mobiles 30a, 30b peuvent prendre deux positions déterminées coordonnées, définies par des butées, grâce aux moyens d'entraînement de manière à conférer deux états différents au circuit magnétique 3. Lors d'un appui sur l'organe d'actionnement 5, 50, les parties mobiles passent d'une position à l'autre. Lorsque les parties mobiles 30a, 30b sont ensemble dans une première position (figures 5A, 6A), le circuit magnétique 3 est dans un premier état et lorsque les parties mobiles 30a, 30b sont ensemble dans une deuxième position (figures 5B, 6B), le circuit magnétique est dans un second état. Dans le premier état du circuit magnétique 3, la bobine 2 est traversée dans un premier sens par un flux magnétique F1 (figure 6A) et dans le second état du circuit magnétique 3, la bobine est traversée par un flux magnétique F2 dans un sens opposé au premier sens (figure 6B). Ainsi la bobine 2 subit une forte variation de flux permettant de créer par induction un courant électrique dans son enroulement 21. Si l'organe d'actionnement 5, 50 revient dans sa position initiale après un actionnement, par exemple à l'aide d'un ressort 8, les parties mobiles 30a, 30b font un aller et retour, c'est-à-dire passent d'une position à l'autre puis reviennent en position initiale. Il est possible d'utiliser cette configuration pour certaines applications.

Le circuit magnétique 3 traverse l'ouverture centrale de la bobine 2 et comporte à l'extérieur de la bobine 2 deux chemins différents correspondant aux deux positions des parties mobiles 30a, 30b. Selon la position des parties mobiles, le flux magnétique F1, F2 emprunte donc un chemin différent dans le circuit magnétique 3. De manière simplifiée, la partie fixe du circuit magnétique 3 comporte ainsi plusieurs éléments ferromagnétiques, c'est-à-dire :
- une première portion 32 traversant l'ouverture centrale de la bobine 2 qui est traversée par les flux magnétiques F1, F2 dans chacun des deux sens,
- deux portions latérales 33a, 33b prolongeant des deux côtés la première portion 32, à l'extérieur de la bobine 2,
- deux portions centrales 34a, 34b parallèles entre elles séparées des deux portions latérales 33a, 33b pour
définir les deux chemins différents empruntés par le flux magnétique en fonction des positions prises par les parties mobiles 30a, 30b.

Dans la première position (figure 6A) des parties mobiles 30a, 30b, chaque partie mobile 30a, 30b est séparée d'une portion latérale 33a, 33b adjacente par un premier entrefer et d'une portion centrale 34a, 34b par un second entrefer. Dans la deuxième position (figure 6B) des parties mobiles 30a, 30b, chaque partie mobile est séparée de la même portion latérale 33a, 33b par un premier entrefer et de l'autre portion centrale 34a, 34b par un second entrefer.

Suivant le schéma défini ci-dessus, différentes configurations peuvent être conférées au circuit magnétique, notamment dans le but de limiter le nombre de pièces. Les portions centrales 34a, 34b peuvent par exemple être formées en une seule pièce (figures 5A et 5B) séparée des deux portions latérales 33a, 33b par des entrefers plus importants que ceux existants entre les parties mobiles 30a, 30b et les portions latérales 33a, 33b et entre les parties mobiles 30a, 30b et les portions centrales 34a, 34b. La partie fixe du circuit magnétique 3 forme par exemple deux ouvertures circulaires dans lesquelles les parties mobiles 30a, 30b sont actionnées en rotation. Bien entendu, on pourrait également envisager d'utiliser plus de deux parties mobiles.

Dans une première variante de réalisation, les deux parties mobiles 30a, 30b comprennent chacune un aimant permanent 4a, 4b. Les deux aimants permanents 4a, 4b ont naturellement tendance à s'attirer par effet magnétique et à s'aligner dans le circuit magnétique 3. Dans la première position des parties mobiles 30a, 30b, le pôle Nord (N) d'un premier aimant permanent 4a est en vis-à-vis du pôle Sud (S) du second aimant permanent 4b (figure 6A) et dans la seconde position des parties mobiles, le pôle Sud du premier aimant permanent 4a est en vis-à-vis du pôle Nord du second aimant permanent 4b (figure 6B). Ainsi lors du passage d'une position à l'autre, les parties mobiles génèrent d'abord un effort résistant lors de la première partie de l'actionnement puis un effort moteur lors de la seconde partie de l'actionnement. Dans chacune des positions des parties mobiles, les axes d'aimantation des deux aimants permanents présentent une forme en V à l'endroit ou une forme en V renversé.

Ainsi, dans la première position des parties mobiles 30a, 30b (figure 6A), le flux magnétique F1 parcourt le chemin suivant :
- la première portion 32 du circuit magnétique 3,
- première portion latérale 33a,
- premier aimant permanent 4a,
- première portion centrale 34a,
- second aimant permanent 4b,
- seconde portion latérale 33b,
- première portion 32 du circuit magnétique 3.

Dans la seconde position des parties mobiles (figure 6B), le flux magnétique F2 parcourt le chemin inverse suivant :
- première portion 32 du circuit magnétique 3,
- seconde portion latérale 33b,
- second aimant permanent 4b,
- seconde portion centrale 34b,
- première aimant permanent 4a,
- première portion latérale 33a,
- première portion 32 du circuit magnétique 3.

L'utilisation de deux aimants permanents 4a, 4b permet ainsi de réduire l'effort d'actionnement du dispositif et d'augmenter la vitesse de rotation des parties mobiles lors de la seconde partie de l'actionnement ce qui produit une variation de flux importante et donc une tension induite élevée dans le fil de l'enroulement 21 de la bobine 2. Si les deux aimants permanents 4a, 4b sont identiques et si les entrefers formés entre chaque partie mobile et la partie fixe sont identiques, le flux magnétique F1 généré dans le circuit magnétique lorsque le circuit magnétique 3 est dans le premier état est égal à l'inverse du flux magnétique F2 lorsque le circuit magnétique 3 est dans le second état. Dans la configuration où les parties mobiles 30a, 30b font un aller et retour entre leurs deux positions, on génère une énergie double résultant de l'énergie générée lors du passage des parties mobiles 30a, 30b de leur première position à leur seconde position et de l'énergie générée lors du retour des parties mobiles 30a, 30b à leur première position.

Dans une seconde variante de réalisation (figure 7) du dispositif de l'invention, un seul aimant permanent 6 est positionné dans la partie fixe du circuit magnétique 3 et les parties mobiles 30a, 30b comprennent deux éléments ferromagnétiques 40a, 40b rotatifs. L'aimant permanent 6 est par exemple positionné entre les deux portions centrales 34a, 34b du circuit magnétique 3. L'aimantation de l'aimant permanent 6 est orientée suivant un axe perpendiculaire aux axes de rotation des parties mobiles 30a, 30b. Lorsqu'une extrémité d'une partie mobile 30a est en vis-à-vis du pôle Nord de l'aimant permanent 6, une extrémité de l'autre partie mobile 30b est en vis-à-vis du pôle Sud de l'aimant permanent 6 et inversement. Dans cette variante, vu qu'il n'y qu'un seul aimant permanent, les deux éléments ferromagnétiques 40a, 40b se mettent en parallèle dans chacune de leurs positions. Comme dans la première variante, lors du passage d'une position à l'autre, les parties mobiles génèrent d'abord un effort résistant lors de la première partie de l'actionnement puis un effort moteur lors de la seconde partie de l'actionnement.

De même, dans cette seconde variante de réalisation, l'emploi des deux éléments ferromagnétiques mobiles polarisées permet de réduire l'effort d'actionnement du dispositif et d'augmenter la vitesse de rotation des parties mobiles ce qui produit une variation de flux importante et donc une tension induite élevée dans le fil de l'enroulement 21 de la bobine 2. Dans cette seconde variante, l'emploi d'un aimant 6 équivalent aux deux aimants 4a, 4b utilisés dans la première variante de réalisation permet de générer dans les deux sens un flux magnétique équivalent aux flux magnétiques F1 et F2 définis précédemment. Comme précédemment, il est possible de générer le double d'énergie en ramenant les parties mobiles 30a, 30b en position initiale après un actionnement.

## Revendications

1. Dispositif (1) de génération d'énergie comprenant :
- une bobine d'excitation (2) dotée d'une ouverture centrale,
- un circuit magnétique (3) traversant l'ouverture centrale de la bobine et comportant au moins un aimant permanent (4a, 4b, 6) et plusieurs éléments ferromagnétiques (32, 33a, 33b, 34a, 34b, 40a, 40b) et pouvant prendre deux états, un premier état dans lequel un flux magnétique (F1) traverse la bobine (2) dans un premier sens et un deuxième état dans lequel un flux magnétique (F2) traverse la bobine (2) dans le sens opposé au premier sens,
**caractérisé en ce que** :
- l'aimant permanent et les éléments ferromagnétiques sont agencés dans une partie fixe et deux parties mobiles (30a, 30b),
- les deux parties mobiles (30a, 30b) sont montées sur deux axes rotatifs parallèles entre eux et peuvent prendre chacune deux positions coordonnées,
- le dispositif comporte des moyens d'actionnement (5, 50) agencés pour actionner les deux parties mobiles (30a, 30b) en rotation entre leurs deux positions,
- lorsque les deux parties mobiles (30a, 30b) sont ensemble dans ladite première position, le circuit magnétique est dans ledit premier état et lorsque les deux parties mobiles sont ensemble dans ladite deuxième position, le circuit magnétique est dans ledit deuxième état.

2. Dispositif selon la revendication 1, **caractérisé en ce que** les deux parties mobiles sont agencées pour que le flux magnétique (F1) créé dans un sens est égal à l'inverse du flux magnétique (F2) créé dans le sens opposé.

3. Dispositif selon la revendication 1 ou 2, **caractérisé en ce que** les deux parties mobiles (30a, 30b) fournissent un effort résistant aux moyens d'actionnement lors d'une première partie de l'actionnement et un effort moteur aux moyens d'actionnement lors d'une seconde partie de l'actionnement.

4. Dispositif selon l'une des revendications 1 à 3, **caractérisé en ce que** l'aimant permanent (6) est fixe et **en ce que** les deux parties mobiles (30a, 30b) comprennent des éléments ferromagnétiques (40a, 40b).

5. Dispositif selon l'une des revendications 1 à 4, **caractérisé en ce que** les deux parties mobiles (30a, 30b) comprennent chacune un aimant permanent (4a, 4b).

6. Dispositif selon la revendication 1, **caractérisé en ce que** les moyens d'actionnement comportent un organe d'actionnement (5, 50) relié à une première partie mobile (30a) et des moyens d'entraînement des parties mobiles en rotation.

7. Dispositif selon la revnedication 6, **caractérisé en ce que** les moyens d'entraînement comprennent des roues à engrenages (31a, 31b) pour entraîner la seconde partie mobile (30b) lors de l'actionnement de la première partie mobile (30a).

8. Dispositif selon la revendication 6, **caractérisé en ce que** l'organe d'actionnement (5) est actionné suivant un axe perpendiculaire aux axes de rotation des parties mobiles (30a, 30b).

9. Dispositif selon la revendication 6, **caractérisé en ce que** l'organe d'actionnement (50) est actionné suivant un axe parallèle aux axes de rotation des parties mobiles (30a, 30b).

10. Dispositif selon l'une des revendications 6 à 9, **caractérisé en ce que** l'organe d'actionnement (5, 50) est monté sur un ressort (8) pour ramener les parties mobiles (30a, 30b) dans leur position initiale après un actionnement.

11. Dispositif de commande autonome et sans fil, comprenant un dispositif (1) de génération d'énergie pour convertir une énergie mécanique en énergie électrique, l'énergie électrique étant apte à alimenter un module d'émission radio couplé à un module de réception distant, **caractérisé en ce que** le dispositif (1) de génération d'énergie est défini dans l'une des revendications 1 à 10.

## Patentansprüche

1. Vorrichtung (1) zur Energieerzeugung, welche umfasst:
- eine Erregerspule (2) mit einer zentralen Öffnung,
- einen Magnetkreis (3), der die zentrale Öffnung der Spule durchquert und mindestens einen Permanentmagneten (4a, 4b, 6) und mehrere ferromagnetische Elemente (32, 33a, 33b, 34a, 34b, 40a, 40b) aufweist und zwei Zustände einnehmen kann, einen ersten Zustand, in welchem ein magnetischer Fluss (F1) die Spule (2) in einer ersten Richtung durchquert, und einen zweiten Zustand, in welchem ein magnetischer Fluss (F2) die Spule (2) in der zur ersten Richtung entgegengesetzten Richtung durchquert,
**dadurch gekennzeichnet, dass**:
- der Permanentmagnet und die ferromagnetischen Elemente in einem festen Teil und zwei beweglichen Teilen (30a, 30b) angeordnet sind,
- die zwei beweglichen Teile (30a, 30b) auf zwei Drehachsen angebracht sind, die zueinander parallel sind und jeweils zwei koordinierte Positionen einnehmen können,
- die Vorrichtung Betätigungsmittel (5, 50) aufweist, die dafür ausgelegt sind, die zwei beweglichen Teile (30a, 30b) zwischen ihren zwei Positionen drehend zu betätigen,
- wenn die zwei beweglichen Teile (30a, 30b) sich zusammen in der ersten Position befinden, der Magnetkreis sich im ersten Zustand befindet, und wenn die zwei beweglichen Teile sich zusammen in der zweiten Position befinden, der Magnetkreis sich im zweiten Zustand befindet.

2. Vorrichtung nach Anspruch 1, **dadurch gekennzeichnet, dass** die zwei beweglichen Teile dafür ausgelegt sind, dass der magnetische Fluss (F1), der in einer Richtung erzeugt wird, gleich dem Inversen des magnetischen Flusses (F2) ist, der in der entgegengesetzten Richtung erzeugt wird.

3. Vorrichtung nach Anspruch 1 oder 2, **dadurch gekennzeichnet, dass** die zwei beweglichen Teile (30a, 30b) während eines ersten Teils der Betätigung den Betätigungsmitteln eine Widerstandskraft und während eines zweiten Teils der Betätigung den Betätigungsmitteln eine Antriebskraft liefern.

4. Vorrichtung nach einem der Ansprüche 1 bis 3, **dadurch gekennzeichnet, dass** der Permanentmagnet (6) fest ist, und dadurch, dass die zwei beweglichen Teile (30a, 30b) ferromagnetische Elemente (40a, 40b) umfassen.

5. Vorrichtung nach einem der Ansprüche 1 bis 4, **dadurch gekennzeichnet, dass** die zwei beweglichen Teile (30a, 30b) jeweils einen Permanentmagneten (4a, 4b) umfassen.

6. Vorrichtung nach Anspruch 1, **dadurch gekennzeichnet, dass** die Betätigungsmittel ein Betätigungsorgan (5, 50), das mit einem ersten beweglichen Teil (30a) verbunden ist, und Mittel zum Drehantrieb der beweglichen Teile aufweisen.

7. Vorrichtung nach Anspruch 6, **dadurch gekennzeichnet, dass** die Antriebsmittel Räder mit Verzahnungen (31a, 31b) umfassen, um während der Betätigung des ersten beweglichen Teils (30a) den zweiten beweglichen Teil (30b) anzutreiben.

8. Vorrichtung nach Anspruch 6, **dadurch gekennzeichnet, dass** das Betätigungsorgan (5) entlang einer Achse betätigt wird, die zu den Drehachsen der beweglichen Teile (30a, 30b) senkrecht ist.

9. Vorrichtung nach Anspruch 6, **dadurch gekennzeichnet, dass** das Betätigungsorgan (50) entlang einer Achse betätigt wird, die zu den Drehachsen der beweglichen Teile (30a, 30b) parallel ist.

10. Vorrichtung nach einem der Ansprüche 6 bis 9, **dadurch gekennzeichnet, dass** das Betätigungsorgan (5, 50) auf einer Feder (8) angebracht ist, um die beweglichen Teile (30a, 30b) nach einer Betätigung in ihre Ausgangsposition zurückzuholen.

11. Vorrichtung zur autonomen und drahtlosen Steuerung, welche eine Vorrichtung (1) zur Energieerzeugung zum Umwandeln einer mechanischen Energie in elektrische Energie umfasst, wobei die elektrische Energie geeignet ist, ein Funksendemodul zu versorgen, das mit einem entfernten Empfangsmodul gekoppelt ist, **dadurch gekennzeichnet, dass** die Vorrichtung (1) zur Energieerzeugung in einem der Ansprüche 1 bis 10 definiert ist.

## Claims

1. An energy generation device (1) comprising:
- an excitation coil (2) provided with a central opening,
- a magnetic circuit (3) passing through the central opening of the coil and comprising at least one permanent magnet (4a, 4b, 6) and several ferromagnetic elements (32, 33a, 33b, 34a, 34b, 40a, 40b), and able to take two states, a first state in which a magnetic flux (F1) passes through the coil (2) in a first direction and a second state in which a magnetic flux (F2) passes through the coil (2) in the direction opposite to the first direction,
**characterized in that**:
- the permanent magnet and the ferromagnetic elements are arranged in a fixed part and two moving parts (30a, 30b),
- the two moving parts (30a, 30b) are mounted on two rotating axes parallel to each other and can each assume two coordinated positions,
- the device comprises actuation means (5, 50) arranged for actuating the two moving parts (30a, 30b) in rotation between their two positions,
- when the two moving parts (30a, 30b) are together in said first position, the magnetic circuit is in said first state and when the two moving parts are together in said second position, the magnetic circuit is in said second state.

2. The device as claimed in claim 1, **characterized in that** the two moving parts are arranged so that the magnetic flux (F1) created in one direction is equal to the inverse of the magnetic flux (F2) created in the opposite direction.

3. The device as claimed in claim 1 or 2, **characterized in that** the two moving parts (30a, 30b) supply a resisting force to the actuation means in a first part of the actuation and a motive force to the actuation means in a second part of the actuation.

4. The device as claimed in one of claims 1 to 3, **characterized in that** the permanent magnet (6) is fixed and **in that** the two moving parts (30a, 30b) comprise ferromagnetic elements (40a, 40b).

5. The device as claimed in one of claims 1 to 4, **characterized in that** the two moving parts (30a, 30b) each comprise a permanent magnet (4a, 4b).

6. The device as claimed in claim 1, **characterized in that** the actuation means comprise an actuation device (5, 50) linked to a first moving part (30a) and means for driving the moving parts in rotation.

7. The device as claimed in claim 6, **characterized in that** the driving means comprise toothed wheels (31a, 31b) for driving the second moving part (30b) when the first moving part (30a) is actuated.

8. The device as claimed in claim 6, **characterized in that** the actuation device (5) is actuated on an axis perpendicular to the rotation axes of the moving parts (30a, 30b).

9. The device as claimed in claim 6, **characterized in that** the actuation device (50) is actuated on an axis parallel to the rotation axes of the moving parts (30a, 30b).

10. The device as claimed in one of claims 6 to 9, **characterized in that** the actuation device (5, 50) is mounted on a spring (8) to return the moving parts (30a, 30b) to their initial position after an actuation.

11. A wireless stand-alone control device, comprising an energy generation device (1) for converting a mechanical energy into electrical energy, the electrical energy being capable of powering a radio transmission module coupled to a remote reception module, **characterized in that** the energy generation device (1) is defined in one of claims 1 to 10.
